# EUROPEAN PATENT APPLICATION

(11) **EP 2 056 252 A2**
(43) Date of publication of application: **06.05.2009**
(21) Application number: 08155251.5
(22) Date of filing: 28.04.2008
(51) Int. Cl.: G06T 1/20

(54) **Segmented image processing apparatus and method and control factor computation apparatus**

(30) Priority: 29.10.2007 KR 20070109067
(71) Applicant: Samsung Electronics Co., Ltd, Suwon-si, Gyeonggi-do 443-742 (KR)
(72) Inventor: Lee, Ho Young, Gyeonggi-do 449-712 (KR); Park, Du-Sik, Gyeonggi-do 449-712 (KR)
(74) Representative: D'Halleweyn, Nele Veerle Trees Gertrudis

(57) **Abstract**

A segmented image processing apparatus and method and a control factor computation apparatus are provided. The segmented image processing apparatus, including: an image segmentation unit to segment an input image into an n number of images; an n number of segmented image processing units to process the segmented images based on a control factor; a control factor computation unit to compute the control factor with respect to each of the segmented image processing units; and an output image synthesis unit to synthesize a result image of each of the segmented images and generate a final output image.

## Description

### CROSS-REFERENCE TO RELATED APPLICATION

This application claims the benefit of Korean Patent Application No. 2007-109067, filed in the Korean Intellectual Property Office on October 29, 2007, the disclosure of which is incorporated herein by reference.

### BACKGROUND OF THE INVENTION

### 1. Field of the Invention

Aspects of the present invention relate to a segmented image processing apparatus and method and a control factor computation apparatus.

### 2. Description of the Related Art

Due to the advent of digital cinema, an interest in a super resolution image display apparatus (4096 X 2160 / 3840 X 2160), superior to an existing full high definition (HD) resolution (1920 X 1080), is increased. Much research on super resolution image display has been conducted by many display companies and research institutes. Also, some display companies have developed and announced a prototype of a super resolution image display such as a liquid crystal display (LCD). Such a super resolution image is composed of at least 2000 lines of resolution, and an image can be represented more graphically due to an expansion of viewing angle. Accordingly, a new image processing technology for super resolution display, superior to an existing HD display application image processing technology, is needed.

### SUMMARY OF THE INVENTION

Aspects of the present invention provide a segmented image processing apparatus and method which segments a resolution of an input image and processes the segmented images in parallel.

Aspects of the present invention also provide a segmented image processing apparatus and method which adaptively corrects a segmented image quality imbalance, caused by an image processing independently performed with respect to segmented images, through an interactive control of segmented image processors.

Aspects of the present invention also provide a control factor computation apparatus which computes a control factor used for an interactive control when segmented images are processed by a segmented image processor, and provides the control factor to the segmented image processor.

According to an aspect of the present invention, there is provided a segmented image processing apparatus, including: an image segmentation unit to segment an input image into an n number of images; an n number of segmented image processing units to process the segmented images based on a control factor; a control factor computation unit to compute the control factor with respect to each of the segmented image processing units; and an output image synthesis unit to synthesize a result image of each of the segmented images and generate a final output image.

The control factor computation unit can compute the control factor using a feature value received from each of the segmented image processing units.

The control factor computation unit can compute the control factor using a reference image with respect to the input image.

The control factor can include any one of a global statistical feature and a nonstatistical feature, and the control factor computation unit includes: a feature selection unit to select any one of a statistical feature and the nonstatistical feature; a statistical feature computation unit to compute the global statistical feature using the statistical feature computed based on the segmented image received from each of the segmented image processing units; and a nonstatistical feature computation unit to compute the nonstatistical feature based on a reference image with respect to the input image.

According to a preferred embodiment the segmented image processing units proces an inputted segmented image based on the control factor, and the segmented image, processed by each of the segmented image processing units, is synthesized as a single final output image.

According to an aspect of the present invention, there is provided a control factor computation apparatus, including: a control factor computation unit to compute a control factor based on a feature value received from an n number of segmented image processing units; and a control factor transmission unit to transmit the control factor to each of the segmented image processing units.

According to a preferred embodiment the segmented image processing units process an inputted segmented image based on the control factor, and the segmented image, processed by each of the segmented image processing units, is synthesized as a single final output image.

According to an aspect of the present invention, there is provided a control factor computation apparatus, including: a control factor computation unit to compute a control factor based on an input image; and a control factor transmission unit to transmit the control factor to each of an n number of segmented image processing units.

According to an aspect of the present invention, there is provided a segmented image processing method, including: segmenting an input image into an n number of images; computing a control factor with respect to each of the segmented images; processing the segmented images based on the control factor; and synthesizing a result image of each of the processed segmented images and generating a final output image.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates an example of a method of segmenting and processing an input image;
FIG. 2 illustrates a configuration of a segmented image processing apparatus according to an embodiment of the present invention;
FIG. 3 illustrates a configuration of a segmented image processing apparatus according to another embodiment of the present invention;
FIG. 4 illustrates a configuration of a segmented image processing apparatus according to still another embodiment of the present invention
FIG. 5 illustrates a segmented image processing method according to an embodiment of the present invention;
FIG. 6 illustrates a configuration of a control factor computation apparatus according to an embodiment of the present invention;
FIG. 7 illustrates an example to describe a control factor computation method according to an embodiment of the present invention; and
FIG. 8 illustrates an example to describe a control factor computation method according to another embodiment of the present invention.

### DETAILED DESCRIPTION OF EMBODIMENTS

Reference will now be made in detail to present embodiments of the present invention, examples of which are illustrated in the accompanying drawings, wherein like reference numerals refer to the like elements throughout. The exemplary embodiments are described below in order to explain the present invention by referring to the figures.

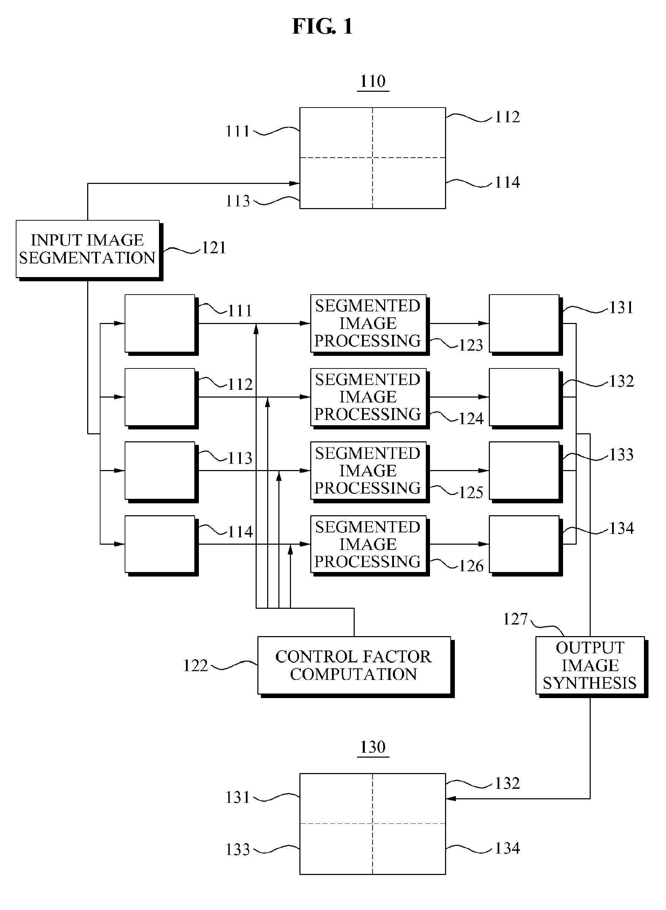

FIG. 1 illustrates an example of a method of segmenting and processing an input image. FIG. 1 illustrates an example of a method to overcome an image quality deterioration due to a segmentation processing of a high resolution image. In FIG. 1, it is illustrated that a segmented image processing apparatus segments a single input image 110 into four segmented images 111, 112,113, and 114 in operation 121, processes each of the segmented images 111, 112,113, and 114, respectively, in operations 123, 124, 125, and 126, and synthesizes output images 131, 132, 133, and 134 in operation 127, in order to obtain a final output image 130. The four segmented images 111, 112,113, and 114 can be processed by four image processors, respectively, in operations 123, 124, 125, and 126.

The segmented image processing apparatus computes a control factor in operation 122, and transmits the control factor to each of the image processors. Each of the image processors can generate a corresponding image from among the output images 131, 132, 133, and 134 based on the control factor and a corresponding image from among the segmented images 111, 112,113, and 114.

That is, each of the image processors is independently operated and has an identical function. Also, each of the image processors can process the corresponding image from among the segmented images 111, 112,113, and 114 through an improved algorithm with respect to a variety of quality elements such as color, detail, texture, and the like. The segmented image processing apparatus interactively controls each of the image processors using the control factor, and thereby can overcome an image quality imbalance.

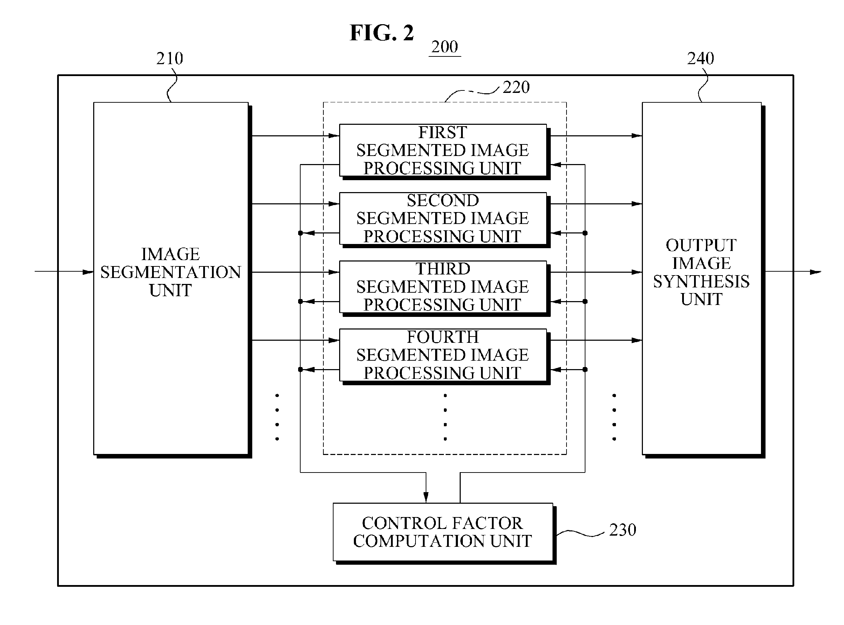

A method and apparatus for processing a segmented image and a method and apparatus for computing a control factor are described in detail with reference to FIGS. 2 through 8. Although a method of segmenting the input image into the four images and processing the segmented images in each of the image processors is illustrated with reference to FIG. 1, the present invention is not limited to the described embodiments and it would be appreciated by those skilled in the art that changes may be made to these embodiments. For example, an input image can be segmented into eight images and the segmented images can be processed by eight image processors. That is, a number of segmented images and a number of image processors can vary.

FIG. 2 illustrates a configuration of a segmented image processing apparatus 200 according to an embodiment of the present invention. As illustrated in FIG. 2, the segmented image processing apparatus 200 includes an image segmentation unit 210, an n number of segmented image processing units 220, a control factor computation unit 230, and an output image synthesis unit 240. The number of segmented image processing units 220 can correspond to the number of image processors which has been described with reference to FIG. 1.

The image segmentation unit 210 segments an input image into an n number of images. For example, an image processing algorithm and hardware complexity can be significantly increased to process a super resolution image. Accordingly, when processing the input image like the super resolution image, the segmented image processing apparatus 200 can segment the input image into the n number of images using the image segmentation unit 210, and enable each of the segmented images to be processed as an input image with respect to each of the n number of segmented image processing units 220.

The n number of segmented image processing units 220 processes the segmented images based on a control factor. Specifically, each of the n number of segmented image processing units 220 can receive a corresponding segmented image from among an n number of segmented images from the image segmentation unit 210, and process the received segmented images based on the control factor. For this, each of the n number of segmented image processing units 220 computes a feature value with respect to the received segmented images, transmits the feature value to the control factor computation unit 230, and receives the control factor from the control factor computation unit 230.

The control factor computation unit 230 computes the control factor with respect to each of the segmented image processing units 220. In this instance, the control factor computation unit 230 can compute the control factor using the feature value received from each of the n number of segmented image processing units 220.

Also, the feature value can include a statistical feature and the control factor can include a global statistical feature with respect to the statistical feature. For example, the feature value can include a difference of a brightness value, saturation value, pixel value, and the like with respect to the segmented images as the statistical feature. The control factor can include an average, distribution, standard deviation, and the like with respect to values of the statistical feature as the global statistical feature.

The output image synthesis unit 240 synthesizes a result image of each of the segmented images and generates a final output image. That is, the output image synthesis unit 240 synthesizes an n number of result images with respect to the n number of segmented images and generates the final output image. The n number of segmented image processing units 220 interactively control and generate the n number of result images through the control factor which is computed by the control factor computation unit 230 using the feature value of each of the segmented images. Also, the n number of result images is synthesized by the output image synthesis unit 240, and thereby can overcome an image quality imbalance.

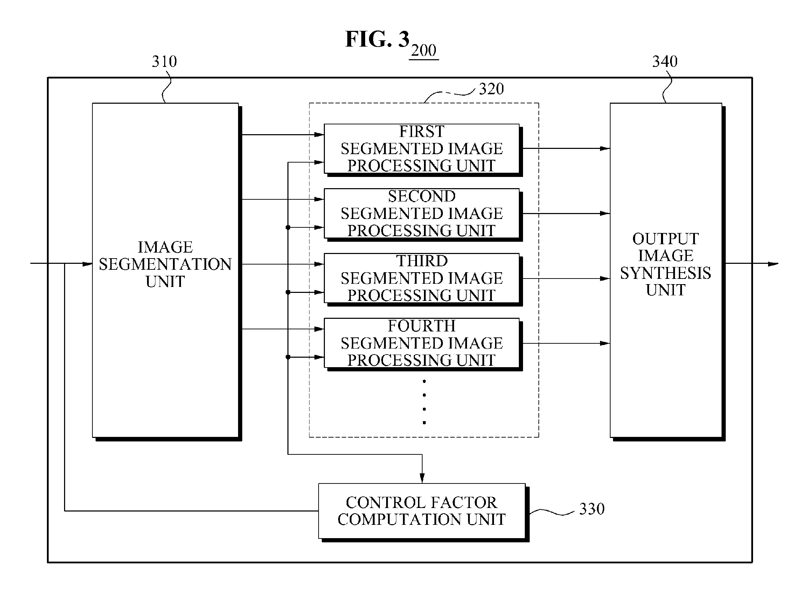

FIG. 3 illustrates a configuration of a segmented image processing apparatus 200 according to another embodiment of the present invention. As illustrated in FIG. 3, the segmented image processing apparatus 200 includes an image segmentation unit 310, an n number of segmented image processing units 320, a control factor computation unit 330, and an output image synthesis unit 340. The image segmentation unit 310 and the output image synthesis unit 340 can correspond to the image segmentation unit 210 and the output image synthesis unit 240 which have been described above with reference to FIG. 2.

The n number of segmented image processing units 320 process segmented images based on a control factor. The n number of segmented image processing units 320 do not compute a feature value with respect to the segmented images received from the image segmentation unit 310, unlike the computation of the feature value as described with reference to FIG. 2.

The control factor computation unit 330 computes the control factor with respect to each of the n number of segmented image processing units 320. The control factor computation unit 330 can compute the control factor using a reference image with respect to an input image. The reference image can include an image having a resolution different from the input image. For example, the control factor computation unit 330 can receive the input image, lower a resolution of the input image, and thereby can generate the reference image.

As described above, the control factor computation unit 330 computes the control factor based on a nonstatistical feature of the reference image with the low resolution, and transmits the control factor to the n number of segmented image processing units 320. Accordingly, the n number of segmented image processing units 320 can process the segmented images based on the control factor.

In FIGS. 2 and 3, the control factor computation unit 230 and 330 computes the control factor using the feature value or the reference image, respectively. However, a segmented image processing unit and a control factor computation unit of a segmented image processing apparatus according to another embodiment of the present invention include all functions of the n number of segmented image processing units 220 and 320 and the control factor computation unit 230 and 330 in FIGS. 2 and 3, and thereby can selectively compute the control factor.

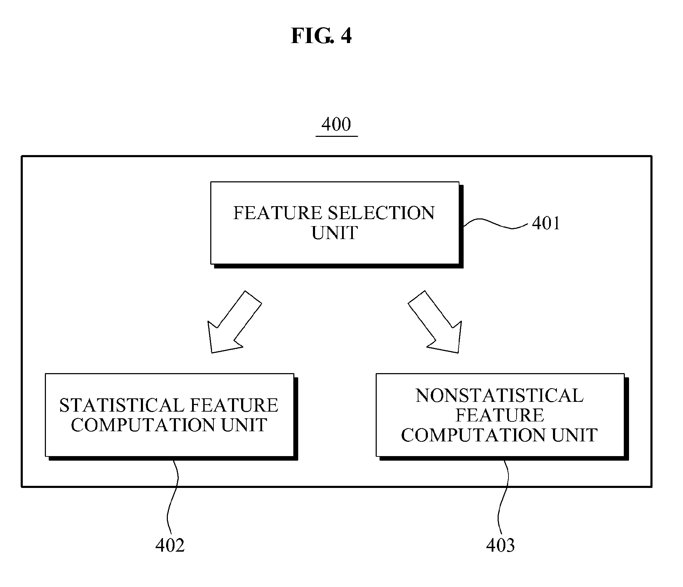

FIG. 4 illustrates a configuration of a segmented image processing apparatus according to still another embodiment of the present invention. FIG. 4 illustrates a configuration of a control factor computation apparatus 400 of the segmented image processing apparatus which process a segmented image by using any one of a statistical feature and a nonstatistical feature. A control factor can include any one of a global statistical feature and the nonstatistical feature.

As illustrated in FIG. 4, the control factor computation apparatus 400 can include a feature selection unit 401, a statistical feature computation unit 402, and a nonstatistical feature computation unit 403. The feature selection unit 401 selects any one of the statistical feature and the nonstatistical feature. The statistical feature computation unit 402 computes the global statistical feature using the statistical feature computed based on a segmented image received from each segmented image processing unit. The nonstatistical feature computation unit 403 computes the nonstatistical feature based on a reference image with respect to an input image.

That is, the control factor computation apparatus 400 can compute the global statistical feature or the statistical feature as the control factor through the statistical feature computation unit 402 or the nonstatistical feature computation unit 403 according to a selection of the feature selection unit 401. The statistical feature computation unit 402 can correspond to the control factor computation unit 230 of FIG. 2, and the nonstatistical feature computation unit 403 can correspond to the control factor computation unit 330 of FIG. 3.

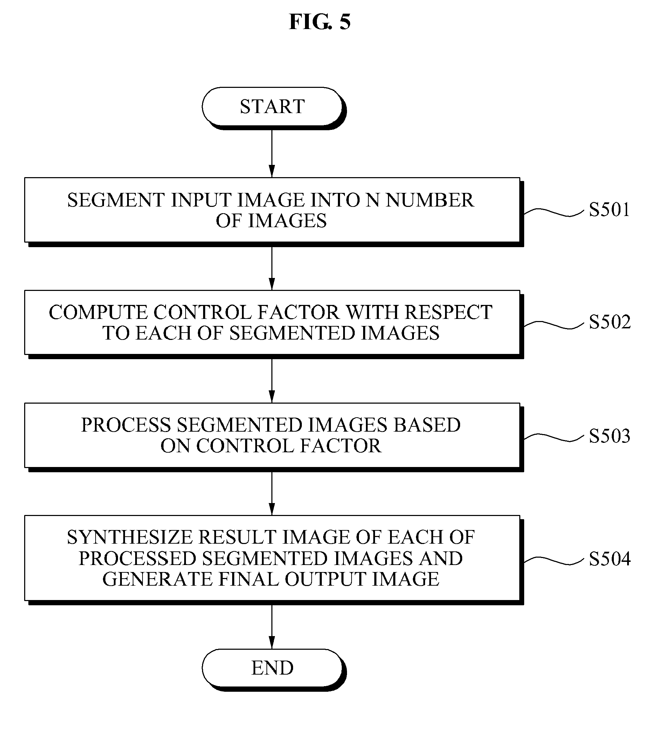

FIG. 5 illustrates a segmented image processing method according to an embodiment of the present invention.

In operation S501, a segmented image processing apparatus segments an input image into an n number of images. For example, an image processing algorithm and hardware complexity can be significantly increased to process a super resolution image. Accordingly, when processing the input image like the super resolution image, the segmented image processing apparatus can segment the input image into the n number of images using the image segmentation unit 210, and enable each of the segmented images to be processed as the input image in operation S501.

In operation S502, the segmented image processing apparatus computes a control factor with respect to each of the segmented images. The segmented image processing apparatus can compute a feature value with respect to each of the n number of segmented images, and compute the control factor using the feature value. The feature value can include a statistical feature and the control factor can include a global statistical feature with respect to the statistical feature. For example, the feature value can include a difference of a brightness value, saturation value, pixel value, and the like with respect to the segmented images as the statistical feature. The control factor can include an average, distribution, standard deviation, and the like with respect to values of the statistical feature as the global statistical feature.

In a different manner, the segmented image processing apparatus can compute the control factor using a reference image with respect to the input image. The reference image can include an image having a resolution different from the input image. For example, the segmented image processing apparatus can lower a resolution of the input image, and thereby can generate the reference image. That is, the segmented image processing apparatus can compute the control factor based on a nonstatistical feature of the reference image with the low resolution, and process the segmented images based on the control factor.

In another different manner, the segmented image processing apparatus can select any one of the statistical feature and the nonstatistical feature, and when the statistical feature is selected, can compute the global statistical feature as the control factor using a statistical feature computed with respect to the segmented images. Conversely, when the nonstatistical feature is selected, the segmented image processing apparatus can compute the nonstatistical feature as the control factor based on the reference image generated with respect to the input image.

In operation S503, the segmented image processing apparatus processes the segmented images based on the control factor. Specifically, the segmented image processing apparatus can process the segmented images and generate a result image after computing the control factor. In this specification, 'processing' with respect to images can include at least one of every type of processing related to image processing.

In operation S504, the segmented image processing apparatus synthesizes a result image of each of the processed segmented images and generates a final output image. That is, the segmented image processing apparatus synthesizes an n number of result images with respect to the n number of segmented images and generates the final output image. The n number of result images is computed by an interactive control of the segmented images through the control factor which is computed by using the feature value of each of the segmented images or the reference image with respect to the input image. Also, the n number of result images is synthesized as the final output image, and thereby can overcome an image quality imbalance.

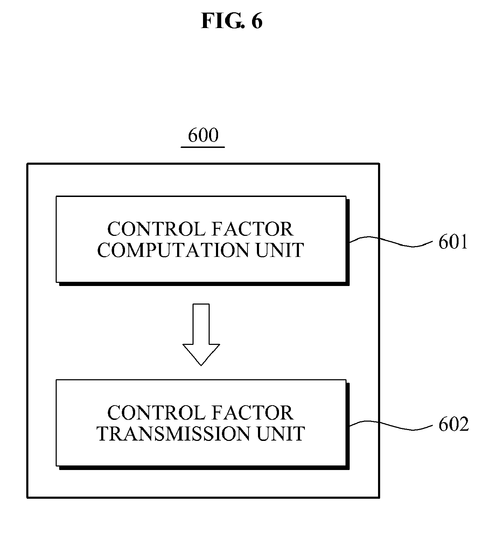

FIG. 6 illustrates a configuration of a control factor computation apparatus 600 according to an embodiment of the present invention. The control factor computation apparatus 600 can correspond to control factor computation units 230 and 330 of FIGS. 2 and 3. Accordingly, the control factor computation apparatus 600 can compute a control factor in various ways as described with reference to FIGS. 2 through 5. As illustrated in FIG. 6, the control factor computation apparatus 600 can include a control factor computation unit 601 and a control factor transmission unit 602. Hereinafter, the control factor computation apparatus 600 is described through three methods as an example.

In a first method, the control factor computation unit 601 computes a control factor based on a feature value received from an n number of segmented image processing units. The control factor can include a global statistical feature, and the control factor computation unit 601 can compute the global statistical feature using a statistical feature computed by each of the segmented image processing units. The feature value can include a statistical feature, and the control factor can include a global statistical feature with respect to the statistical feature. For example, the feature value can include a difference of a brightness value, saturation value, pixel value, and the like with respect to the segmented images as the statistical feature. The control factor can include an average, distribution, standard deviation, and the like with respect to values of the statistical feature as the global statistical feature.

In a second method, the control factor computation unit 601 computes the control factor based on an input image. The control factor can include a nonstatistical feature, and the control factor computation unit 601 can compute the nonstatistical feature using a reference image having a resolution different from the input image. The reference image can include an image having a resolution different from the input image. For example, the control factor computation unit 601 lowers a resolution of the input image, and thereby can generate the reference image. That is, the control factor computation unit 601 can compute the control factor based on a nonstatistical feature of the reference image with the low resolution.

In a third method, the control factor computation unit 601 can process the above-described two methods. Also, the control factor computation unit 601 can select any one of the two methods, and compute the control factor.

The control factor transmission unit 602 transmits the control factor, computed by the control factor computation unit 601, to each of the n number of segmented image processing units. Each of the n number of segmented image processing units can process inputted segmented images based on the control factor. The segmented images processed by each of the n number of segmented image processing units can be synthesized as a final output image.

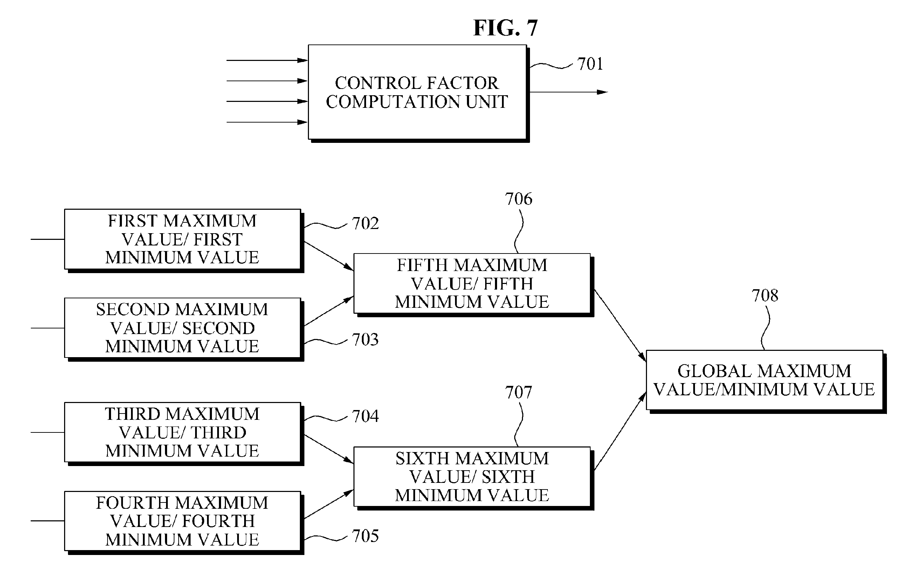

FIG. 7 illustrates an example to describe a control factor computation method according to an embodiment of the present invention. FIG. 7 illustrates an example of predicting a maximum value/minimum value of an entire high definition image using a maximum value/minimum value of a segmented image processing unit. A control factor computation unit 701 can compute a control factor using a feature value generated by each of four segmented image processing units.

The control factor computation unit 701 receives a first maximum value/first minimum value 702, a second maximum value/second minimum value 703, a third maximum value/third minimum value 704, and a fourth maximum value/fourth minimum value 705, that is, the feature value generated by each of the segmented image processing units.

The control factor computation unit 701 can compute a fifth maximum value/fifth minimum value 706 by applying a statistical method to the first maximum value/first minimum value 702 and the second maximum value/second minimum value 703. Also, the control factor computation unit 701 can compute a sixth maximum value/sixth minimum value 707 by applying the statistical method to the third maximum value/third minimum value 704 and the fourth maximum value/fourth minimum value 705. Also, the control factor computation unit 701 can compute a global maximum value/minimum value 708 as the control factor by applying the statistical method to the fifth maximum value/fifth minimum value 706 and the sixth maximum value/sixth minimum value 707. A method of computing an average of maximum values and an average of minimum values can be used as the statistical method.

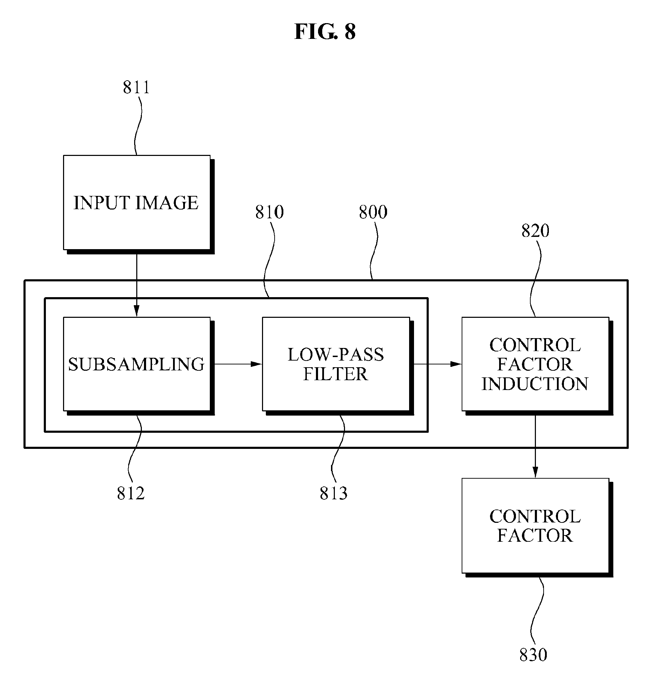

FIG. 8 illustrates an example to describe a control factor computation method according to another embodiment of the present invention. A control factor computation unit 800 can generate a reference image in operation 810, and compute a control factor 830 through a control factor induction 820 from the reference image. Specifically, the control factor computation unit 800 performs a subsampling in operation 812 with respect to an input image 811. Also, the reference image can be obtained by applying a low pass filter 813 to a result of the subsampling in operation 812. The reference image has a low resolution in comparison with the input image 811. A computational quantity and computing speed can be improved since the control factor computation unit 800 computes the control factor 830 using the reference image with the low resolution.

The above-described example embodiments of the present invention may be recorded in a computer-readable media including program instructions to implement various operations embodied by a computer. The media may also include, alone or in combination with the program instructions, data files, data structures, and the like. The media and program instructions may be those specially designed and constructed for the purposes the example embodiment of the present invention, or they may be of the kind well-known and available to those having skill in the computer software arts. Examples of computer-readable media include magnetic media such as hard disks, floppy disks, and magnetic tape, optical media, for example, CD ROM disks and DVD, magneto-optical media, for example, optical disks, and hardware devices that may be specially configured to store and perform program instructions, for example, read-only memory (ROM), random access memory (RAM), flash memory, and the like. The media may also be a transmission medium such as optical or metallic lines, wave guides, etc. including a carrier wave transmitting signals specifying the program instructions, data structures, etc. Examples of program instructions include both machine code, for example, produced by a compiler, and files containing higher level code that may be executed by the computer using an interpreter. The described hardware devices may be configured to act as one or more software modules in order to perform the operations of the above-described example embodiments of the present invention.

Although a few embodiments of the present invention have been shown and described, it would be appreciated by those skilled in the art that changes may be made to these embodiments without departing from the principles and spirit of the invention, the scope of which is defined by the claims and their equivalents.

## Claims

1. A segmented image processing apparatus (200), comprising:
an image segmentation unit (210, 310) to segment an input image into an n number of images;
an n number of segmented image processing units (220, 320) to process the n number of segmented images based on a control factor;
a control factor computation unit (230, 330) to compute the control factor with respect to each of the segmented image processing units; and
an output image synthesis unit (240, 340) to combine a result image of each of the segmented images and generate a final output image.

2. The segmented image processing apparatus of claim 1, wherein the control factor computation unit is arranged for computing the control factor using a feature value received from each of the segmented image processing units.

3. The segmented image processing apparatus of claim 1, wherein the control factor computation unit is arranged for computing the control factor using a reference image with respect to the input image.

4. The segmented image processing apparatus of claim 1, wherein the control factor includes any one of a global statistical feature and a nonstatistical feature, and
the control factor computation unit comprises:
a feature selection unit (401) to select any one of a statistical feature and the nonstatistical feature;
a statistical feature computation unit (402) to compute the global statistical feature using the statistical feature computed based on the segmented image received from each of the segmented image processing units; and
a nonstatistical feature computation unit (403) to compute the nonstatistical feature based on a reference image with respect to the input image.

5. A control factor computation apparatus (600), comprising:
a control factor computation unit (601) to compute a control factor based on a feature value received from an n number of segmented image processing units; and
a control factor transmission unit (602) to transmit the control factor to each of the segmented image processing units.

6. The control factor computation apparatus of claim 5, wherein the control factor includes a global statistical feature, and the control factor computation unit is arranged for computing the global statistical feature using a statistical feature computed by each of the segmented image processing units.

7. A control factor computation apparatus (600), comprising:
a control factor computation unit (601) to compute a control factor based on an input image; and
a control factor transmission unit (602) to transmit the control factor to each of an n number of segmented image processing units.

8. The control factor computation apparatus of claim 7, wherein the control factor includes a nonstatistical feature, and the control factor computation unit is arranged for computing the nonstatistical feature using a reference image having a resolution different from the input image.

9. A segmented image processing method, comprising:
segmenting (121) an input image (110) into an n number of images (114-114) (S501);
computing (122) a control factor with respect to each of the segmented images (S502);
processing (123-126) the segmented images based on the control factor (S503); and
synthesizing (127) a result image of each of the processed segmented images and generating a final output image (130) (S504).

10. The segmented image processing method of claim 9, wherein the computing comprises computing the control factor using a feature value extracted from each of the segmented images.

11. The segmented image processing method of claim 9, wherein the computing comprises computing the control factor using a reference image generated with respect to the input image.

12. The segmented image processing method of claim 11 or the apparatus of claim 1, wherein the reference image includes an image having a resolution different from the input image.

13. The segmented image processing method of claim 9, wherein the computing comprises:
selecting any one of a statistical feature and a nonstatistical feature; and
computing a global statistical feature as the control factor using a statistical feature computed with respect to the segmented images, when the statistical feature is selected.

14. The segmented image processing method of claim 13, wherein the computing comprises:
computing the nonstatistical feature as the control factor based on a reference image generated with respect to the input image, when the nonstatistical feature is selected.

15. A computer-readable recording medium storing a program for implementing a segmented image processing method, according to any of the claims 9-14.
